# FASCICULE DE BREVET EUROPEEN

(11) **EP 3 688 447 B1**
(45) Date de publication et mention de la délivrance du brevet: **09.08.2023**
(21) Numéro de dépôt: 18826412.1
(22) Date de dépôt: 20.11.2018
(51) Int. Cl.: G01N 21/64, G01N 21/95, H02S 50/15, G01N 21/84

(54) **MÉTHODE DE MESURE PAR PHOTOLUMINESCENCE D'UN ÉCHANTILLON**
VERFAHREN ZUR MESSUNG EINER PROBE DURCH PHOTOLUMINESZENZ
METHOD FOR MEASURING A SAMPLE BY PHOTOLUMINESCENCE

(30) Priorité: 21.11.2017 FR 1761011
(43) Date de publication de la demande: 05.08.2020
(73) Titulaire: Commissariat à l'énergie atomique et aux énergies alternatives, 75015 Paris (FR)
(72) Inventeur: VARACHE, Renaud, 63730 La Sauvetat (FR)
(74) Mandataire: Brevalex
(86) Numéro de dépôt international: PCT/FR2018/052910
(87) Numéro de publication internationale: WO 2019/102125

(56) Documents cités:
- US-A1- 2015 323 457
- US-A1- 2016 341 665

## Description

### DOMAINE TECHNIQUE

La présente invention concerne une méthode de mesure par photoluminescence. En particulier, la présente invention concerne une méthode de mesure par photoluminescence d'une cellule photovoltaïque, permettant de détecter sans ambiguïté les bords de la cellule photovoltaïque sondée.

### ART ANTÉRIEUR

Les mesures par photoluminescence sont des techniques de choix pour sonder les propriétés électroniques et/ou optiques des matériaux, et notamment les matériaux semi-conducteurs.

En pratique, les mesures par photoluminescence mettent en oeuvre l'excitation d'un matériau par un rayonnement laser de manière à promouvoir la transition d'électrons dudit matériau de leur niveau d'énergie fondamental (aussi appelé « état d'équilibre ») vers des niveaux d'énergies supérieures.

Les électrons ainsi promus retournent dans leur état d'équilibre selon des chemins de recombinaisons radiatives ou non-radiatives dépendamment de la qualité du matériau sondé. A cet égard, l'homme du métier trouvera dans le document [1], cité à la fin de la description, une étude des modes de recombinaisons radiatives et non-radiatives intervenant lors d'une mesure par photoluminescence.

En particulier, les recombinaisons non-radiatives, généralement associées à la présence de défauts ou à des phénomènes de type Auger, se produisent au détriment des recombinaisons radiatives

Le taux de recombinaisons radiatives, dont le niveau ou l'intensité mesurée dans le temps représente le signal de photoluminescence, permet de caractériser la qualité du matériau sondé. En particulier, les mesures par photoluminescence permettent de détecter et/ou de localiser des défauts susceptibles d'être présents dans le matériau sondé.

Selon une technique particulière de photoluminescence résolue spatialement développée par Trupke et al., et décrite dans le document [2] cité la fin de la description, il est également possible d'établir une cartographie de photoluminescence de l'échantillon sondé et notamment repérer les défauts dudit échantillon.

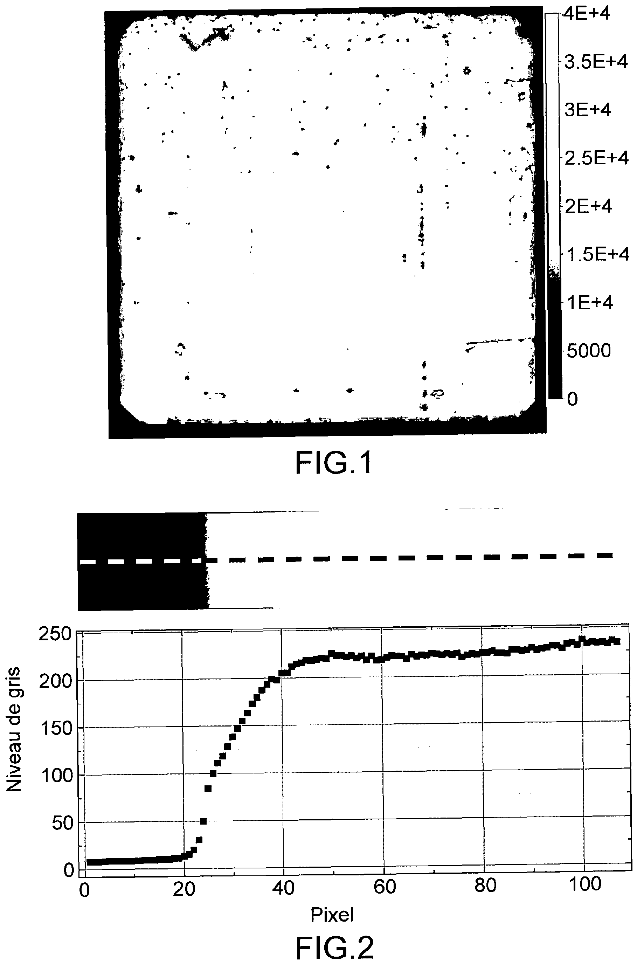

A cet égard, la figure 1 représente une cartographie de photoluminescence, en niveaux de gris, d'un échantillon de silicium reposant sur un socle et comprenant une surface passivée avec du silicium amorphe.

Les zones les plus claires sont le siège d'un taux de recombinaisons radiatives plus fort que les zones sombres. Inversement les zones sombres sont le siège d'un taux de recombinaisons non-radiatives plus fort que les zones claires. Les zones claires sont donc des zones caractéristiques d'une faible densité de défauts et les zones sombres sont révélatrices d'une densité de défauts importante.

Parmi les zones sombres, la section périphérique ou bord de l'échantillon attire particulièrement l'attention.

En effet, les procédés de fabrication de telles cellules photovoltaïques impliquent des étapes particulièrement agressives qui peuvent chacune contribuer à la dégradation des bords desdites cellules photovoltaïques qui, à terme, concentrent une densité de défauts importante.

De cette concentration de défauts importante résulte un très faible niveau de photoluminescence et donc une impossibilité de distinguer le bord de la cellule photovoltaïque du socle sur lequel cette dernière repose. En d'autres termes, le contraste de l'intensité de photoluminescence entre le bord de la cellule photovoltaïque et le socle est insuffisant pour repérer ledit bord (figure 2).

Il est par conséquent difficile, voire impossible, de quantifier les contributions relatives des différentes étapes du procédé de fabrication de la cellule photovoltaïque à la dégradation du bord.

Par ailleurs, la non détection des bords des cellules photovoltaïques limite l'analyse de la surface électroniquement ou optiquement active dudit échantillon.

Un but de la présente invention est alors de proposer une méthode de mesure par photoluminescence pour laquelle le bord de la cellule photovoltaïque mesurée peut être identifié.

### EXPOSÉ DE L'INVENTION

Le but de la présente invention est résolu par une méthode de mesure par photoluminescence d'une cellule photovoltaïque selon la revendication 1.

Selon un mode de mise en oeuvre, la distance de débordement, au moins au niveau de l'au moins une première région, est ajustée de sorte que l'évolution de l'intensité du signal de photoluminescence entre la section périphérique et la première région, révèle une singularité repérant le contour de la cellule photovoltaïque au niveau de la première région.

Selon un mode de mise en oeuvre, la singularité est un minimum de l'intensité du signal de photoluminescence.

Selon un mode de mise en oeuvre, la première région comprend une densité de défauts supérieure à la densité de défauts moyenne de la cellule photovoltaïque.

Selon un mode de mise en oeuvre, une charge de type corona est créée sur une face, dite seconde face, du socle actif opposée à la face d'accueil, la charge de type corona étant destinée à ajuster le niveau de l'intensité secondaire.

Selon un mode de mise en oeuvre, la charge de type corona est créée par une anode et une cathode disposées en regard, respectivement, de la face d'accueil et de la seconde face.

Selon un mode de mise en oeuvre, l'anode comprend une grille intercalée entre la cellule photovoltaïque et le socle actif.

Selon un mode de mise en oeuvre, le socle actif comprend une première couche de passivation en recouvrement de sa face d'accueil, la première couche de passivation étant destinée à guérir des défauts susceptibles d'être présents sur la face d'accueil.

Selon un mode de mise en oeuvre, la première couche de passivation comprend une couche faite d'un matériau diélectrique ou de silicium amorphe hydrogéné, avantageusement le matériau diélectrique comprend au moins un des éléments choisi parmi : dioxyde de silicium, nitrure de silicium, alumine.

Selon un mode de mise en oeuvre, le socle actif comprend un matériau semi-conducteur, avantageusement le matériau semi-conducteur comprend du silicium.

Selon un mode de mise en oeuvre, la cellule photovoltaïque comprend également au moins une seconde région, délimitée en partie par le contour et qui émet un signal de photoluminescence d'une intensité, dite seconde intensité, en moyenne égale à l'intensité de référence, la méthode de mesure mettant en oeuvre des moyens de masquage destinés à masquer le signal de photoluminescence émis par une région de la section périphérique attenante à la seconde région.

Selon un mode de mise en oeuvre, les moyens de masquage comprennent un socle intermédiaire intercalé entre l'échantillon et le socle actif, le socle intermédiaire comprenant une région de masquage en recouvrement de la de la section périphérique attenante à la seconde région.

Selon un mode de mise en oeuvre, laquelle l'au moins une première région s'étend selon toute la circonférence de la cellule photovoltaïque.

Selon un mode de mise en oeuvre, l'exécution du procédé comprend l'excitation par un laser de la cellule photovoltaïque et de la section périphérique du socle actif.

Selon un mode de mise en oeuvre, le laser balaie la face avant et la face d'accueil au niveau de la section périphérique.

Selon un mode de mise en oeuvre, le laser présente une taille adaptée pour exciter de manière simultanée la cellule photovoltaïque et le socle actif.

Selon un mode de mise en oeuvre, le signal de photoluminescence émis par la cellule photovoltaïque et par le socle actif est collecté par un détecteur.

### BRÈVE DESCRIPTION DES DESSINS

D'autres caractéristiques et avantages apparaîtront dans la description qui va suivre d'une méthode de mesure par photoluminescence selon l'invention, donnés à titre d'exemples non limitatifs, en référence aux dessins annexés dans lesquels :
- la figure 1 est une cartographie de la photoluminescence d'un échantillon de silicium reposant sur un socle mesurée selon une méthode connue de l'état de la technique, l'intensité de la photoluminescence est donnée selon une échelle de niveaux de gris attachée à la figure ;
- la figure 2 est une représentation graphique d'un profil de mesure de l'intensité de photoluminescence (selon l'axe vertical en unité arbitraire) en fonction d'une position selon un segment (selon l'axe vertical en unité arbitraire) traversant le bord de l'échantillon, le segment figurant également en traits interrompus sur une section de cartographie extraite de la figure 1 et attachée à ladite représentation graphique ;

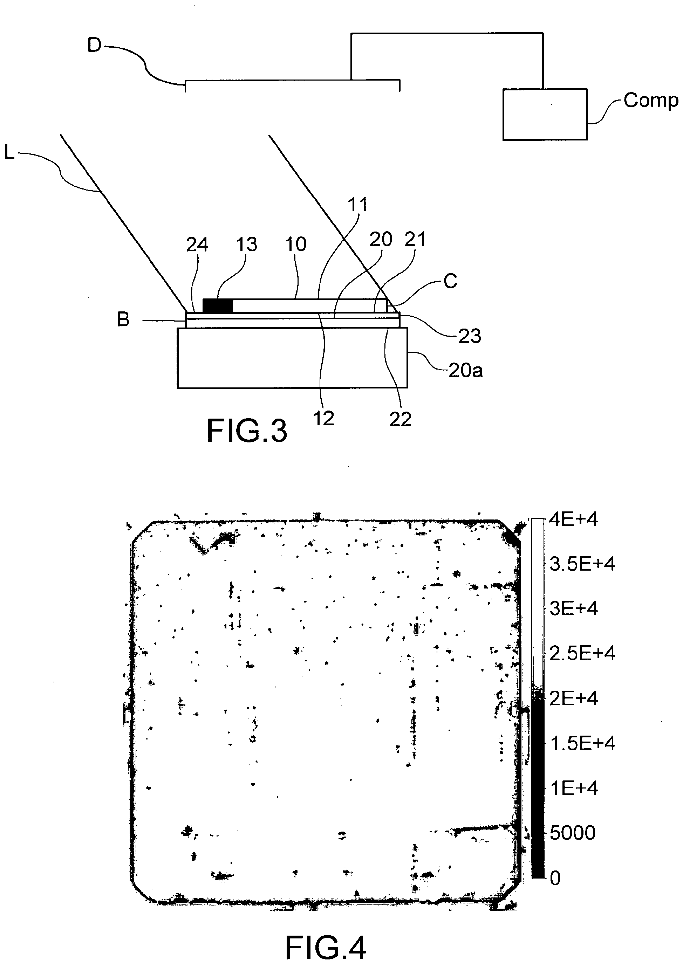

- la figure 3 représente un agencement d'un échantillon disposé sur un socle actif pour la mise en oeuvre de la mesure par photoluminescence dudit échantillon selon un premier mode de mise en oeuvre de la présente invention ;
- la figure 4 représente une cartographie de l'intensité du signal de photoluminescence mesurée sur un échantillon de silicium reposant sur un socle actif selon la présente invention, la présence de la section périphérique, et en particulier la détection du signal de photoluminescence relative à ladite section, révèle une bande sombre et étroite, et dessinant un contour qui est associé au contour C de l'échantillon de silicium ;

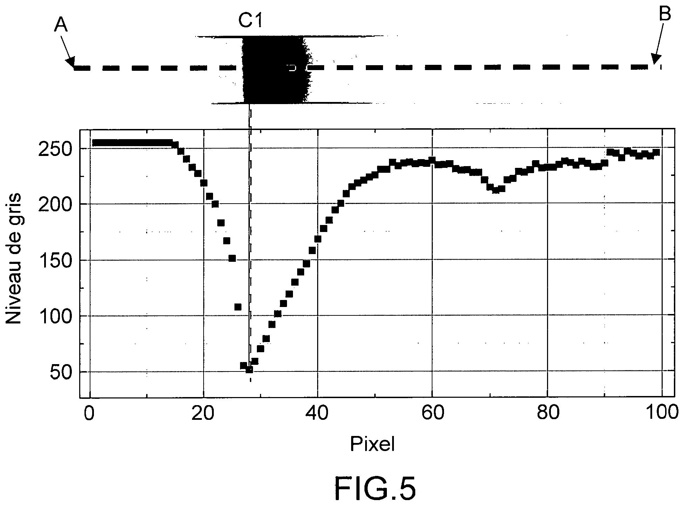

- la figure 5 est une représentation graphique d'un profil de l'intensité de photoluminescence (axe vertical, en unité arbitraire), selon une position (axe horizontal, en unité arbitraire) sur un axe s'étendant d'un point A de la section périphérique vers un point B de la première région, l'axe croisant le contour C en un point C1, l'axe figurant également en traits interrompus sur une section de cartographie extraite de la figure 4 et attachée à ladite représentation graphique

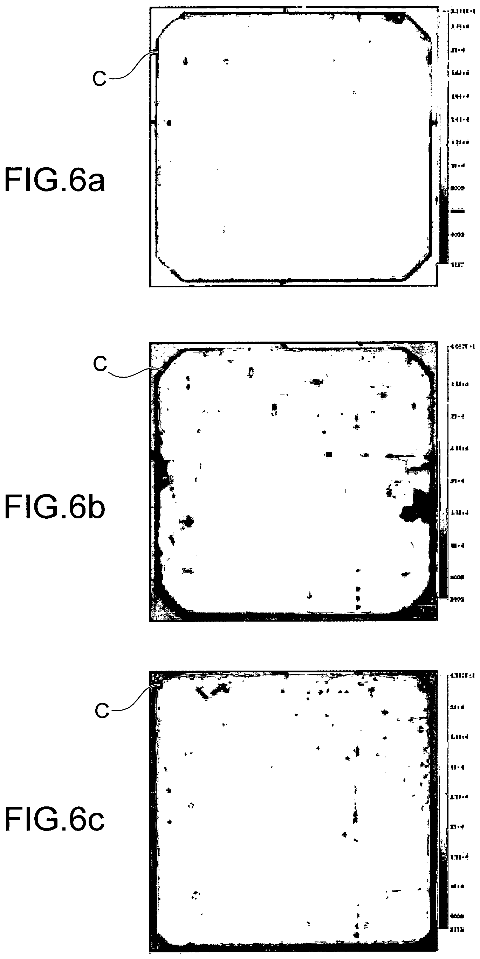

- les figures 6a à 6c représentent des cartographies de photoluminescence mesurées, respectivement, sur un premier, un second et un troisième échantillons selon la présente invention, en particulier, l'intensité de référence croit du premier échantillon au troisième échantillon, et le socle actif, dit premier socle actif, mis en oeuvre pour ces trois mesures, présente une intensité secondaire généralement inférieure à l'intensité de référence des second et troisième échantillons ;

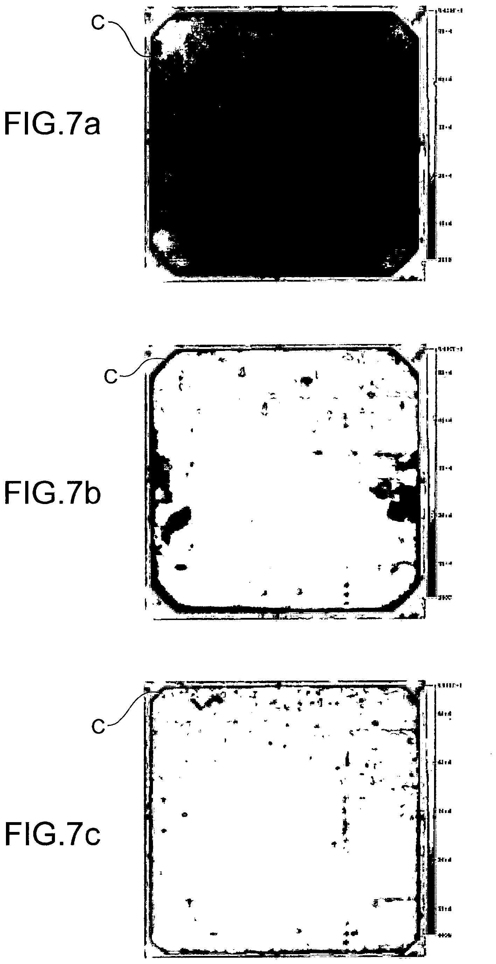

- les figures 7a à 7c représentent des cartographies des premier, second et troisième échantillons, pris dans cet ordre, et mettent en oeuvre un socle actif différent de celui des figures 6a à 6c, dit second socle actif, et qui présente une intensité secondaire supérieure à l'intensité de référence du troisième échantillon

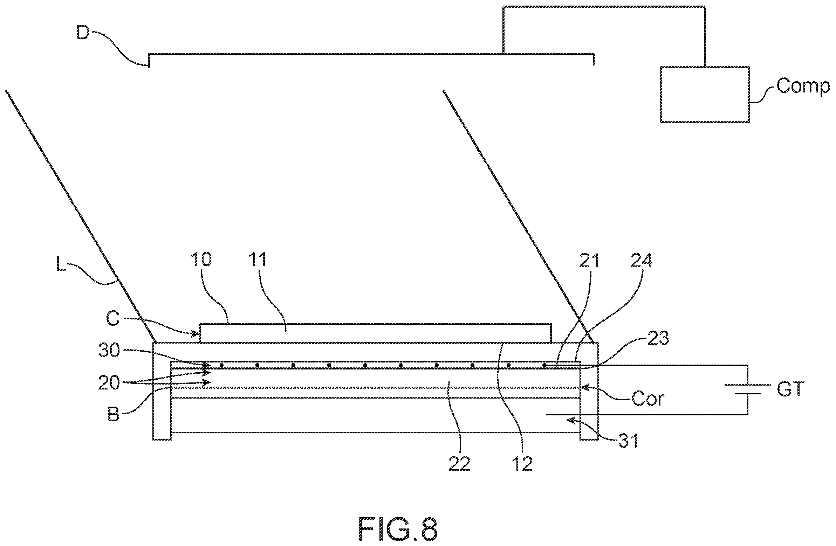

- la figure 8 représente un agencement d'un échantillon disposé sur un socle actif pour la mise en oeuvre de la mesure par photoluminescence dudit échantillon selon un second mode de mise en oeuvre de la présente invention ;

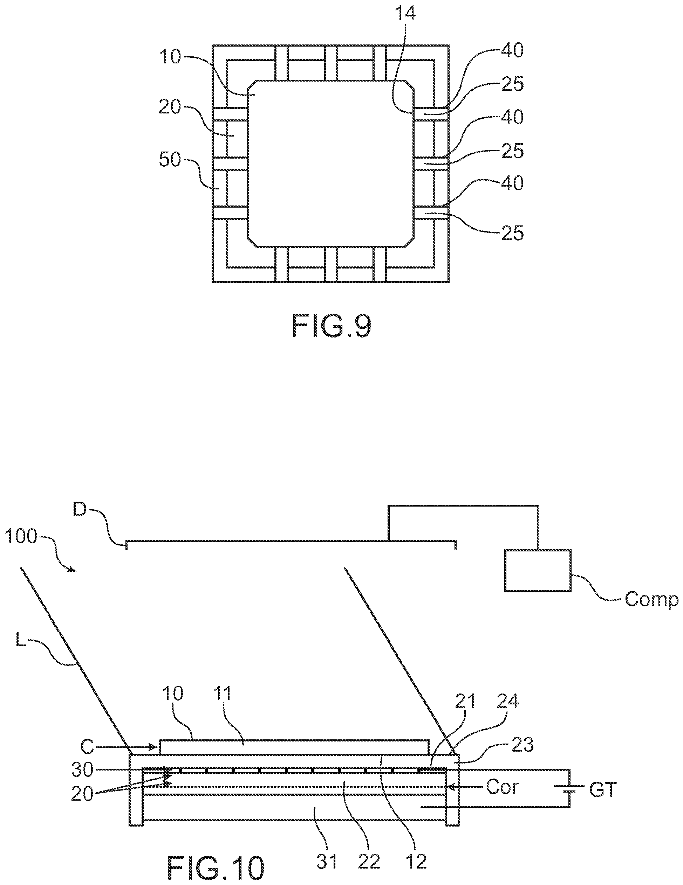

- la figure 9 est une représentation schématique d'un agencement mettent en oeuvre un socle intermédiaire intercalé entre le socle actif et l'échantillon susceptible d'être mis en oeuvre pour l'un ou l'autre des premier et second modes de mise en oeuvre de la présente invention ;
- la figure 10 est une représentation schématique d'un dispositif susceptible d'être mis en oeuvre pour l'exécution de la mesure selon la présente invention.

### EXPOSÉ DÉTAILLÉ DE MODES DE RÉALISATION PARTICULIERS

La présente invention est décrite ci-dessous pour un « échantillon » 10, mais celui-ci comporte une cellule photovoltaïque.

La présente invention met en oeuvre une méthode de mesure par photoluminescence d'un échantillon reposant sur un socle actif. En particulier, le socle actif, selon la présente invention, est susceptible d'émettre un signal de photoluminescence d'une intensité au moins égale à l'intensité moyenne du signal de photoluminescence émis par l'échantillon. Le socle actif présente également une surface supérieure à celle de l'échantillon de sorte que lorsque ce dernier repose sur ledit socle actif, une section périphérique dépasse de l'échantillon et émet un signal de photoluminescence détectable et permettant, par différence de contraste, de détecter le contour de l'échantillon au voisinage de régions peu émissives dudit échantillon et en partie délimitées par ledit contour.

A la figure 3, on peut voir un exemple d'agencement d'un échantillon 10 disposé sur un socle actif 20 pour la mise en oeuvre de la mesure par photoluminescence dudit échantillon 10 selon un premier mode de mise en oeuvre de la présente invention.

Il est entendu que la mesure par photoluminescence implique la détection, par un détecteur D, d'un signal lumineux émis par l'échantillon sous l'action d'une excitation par une source d'excitation laser L. Le détecteur D est connecté à un calculateur ou ordinateur Comp adapté pour analyser les données collectées par ledit détecteur D et former et/ou afficher des cartographies de luminescence des échantillons mesurés.

Aussi, il est entendu dès lors qu'il est fait mention d'un échantillon ou d'un autre objet émettant un signal de photoluminescence, que ledit signal est le résultat d'une excitation laser desdits échantillon ou objet.

Il sera également clair dans toute la suite de l'énoncé de la présente invention que la mesure par photoluminescence concerne l'échantillon mais également un socle, dit socle actif, sur lequel repose l'échantillon. En particulier, la mesure de socle actif concerne essentiellement une section périphérique dudit socle actif.

L'échantillon 10 comprend deux faces essentiellement parallèles dites, respectivement, face avant 11 et face arrière 12, et reliées par un contour C.

Ainsi, le contour C délimite l'échantillon 10 et constitue donc le bord dudit échantillon 10.

L'échantillon 10 peut comprendre tout type de matériau susceptible d'émettre un signal de photoluminescence sous l'effet d'une excitation par un laser d'excitation.

En particulier, l'échantillon 10 peut comprendre un matériau semi-conducteur. Par exemple, le matériau semi-conducteur peut comprendre du silicium.

Ici, l'échantillon 10 est une cellule photovoltaïque.

L'échantillon comprend également une première région 13, délimitée en partie par le contour C et émettant un signal de photoluminescence d'une intensité, dite première intensité, en tout point inférieure à l'intensité moyenne du signal de photoluminescence de l'échantillon, dite intensité de référence.

Par « première région délimitée en partie par le contour C », on entend une première région disposée dans une zone périphérique de l'échantillon 10.

La première région 13 peut s'étendre selon toute la circonférence de l'échantillon 10.

La première intensité peut, par exemple, présenter un profil croissant selon un axe s'étendant à partir du contour C, l'axe étant avantageusement perpendiculaire au contour C.

La différence entre la première intensité et l'intensité de référence peut par exemple être due à une densité de défauts plus importante au niveau de la première région par rapport à la densité moyenne de défauts de l'échantillon pris dans son ensemble.

Les défauts sont par exemple des défauts cristallins, des fissures au niveau du contour, ou encore de la rugosité ou des contaminations de surfaces.

La présence de tels défauts favorise le retour à l'équilibre des électrons selon des recombinaisons non radiatives aux dépens des recombinaisons radiatives.

L'échantillon 10 repose sur un socle, dit socle actif 20. En particulier, l'échantillon 10 repose sur une face d'accueil 21 du socle actif 20.

Le socle actif 20 peut reposer sur un socle passif 20a. Par socle passif, on entend un socle qui n'émet pas de signal de photoluminescence sous l'action d'un rayonnement laser. A cet égard, le socle passif 20a peut comprendre un matériau métallique et/ou plastique.

Le socle actif 20 comprend en outre une seconde face 22 opposée et essentiellement parallèle à la face d'accueil 21, les deux faces 21 et 22 étant reliées entre elles par un bord B.

Le socle actif 20 est susceptible d'émettre d'un signal de photoluminescence d'une intensité, dite intensité secondaire, au moins égale à l'intensité de référence.

A cet égard, le socle actif 20 peut comprendre un matériau semi-conducteur, en particulier du silicium.

Le socle actif 20 peut également comprendre une première couche de passivation 23 en recouvrement de la face d'accueil 21 destinée à guérir des défauts susceptibles d'être présents sur ladite face d'accueil 21. La première couche de passivation 23 permet alors de réduire drastiquement les recombinaisons non-radiatives au niveau de la face d'accueil 21 et de limiter les zones sombres lors de la mesure de photoluminescence dues à des défauts présents au niveau du socle actif. En d'autres termes, la première couche de passivation 23 permet d'augmenter et d'uniformiser l'intensité du signal émis par le socle actif 20.

La première couche de passivation 23 peut comprendre un matériau diélectrique ou du silicium amorphe hydrogéné.

Le matériau diélectrique peut comprendre au moins un des matériaux choisi parmi : dioxyde de silicium, nitrure de silicium, alumine.

Par ailleurs, le socle actif 20 comprend en outre un bord B à distance, selon une distance de débordement, du contour C, et délimitant avec ledit contour C une section périphérique 24 du socle actif 20. En d'autres termes, lorsque l'échantillon 10 repose sur le socle actif 20, ce dernier déborde de l'échantillon 10 selon tout le contour C dudit échantillon 10.

Ainsi, la méthode selon la présente invention comprend la mesure par photoluminescence de l'échantillon et, au moins, de la section périphérique 24.

La mesure au sens de la présente invention permet d'établir une cartographie de l'intensité du signal de photoluminescence de l'échantillon 10 et de la section périphérique 24.

Lors de la mesure, le laser peut balayer la face avant 11 et la face d'accueil 21 au niveau de la section périphérique 24.

De manière alternative, le laser peut présenter une taille adaptée pour exciter de manière simultanée l'échantillon 10 et le socle actif 20.

Le signal ainsi collecté par le détecteur D, par exemple un capteur CCD, permet d'établir une cartographie de l'intensité du signal de photoluminescence de l'échantillon 10 et de la section périphérique 24.

La détection du signal de photoluminescence émis par la section périphérique permet d'améliorer le contraste entre le socle actif 20 et le contour C de l'échantillon 10.

A cet égard, la figure 4 représente une cartographie de l'intensité du signal de photoluminescence mesurée sur un échantillon 10 de silicium reposant sur un socle actif 20 selon la présente invention. La présence de la section périphérique 24, et en particulier la détection du signal de photoluminescence relative à ladite section, révèle une bande sombre et étroite, et dessinant un contour qui est associée au contour C de l'échantillon de silicium.

De manière avantageuse, la distance de débordement, au moins au niveau de l'au moins une première région 23, est ajustée de sorte que l'évolution de l'intensité du signal de photoluminescence entre la section périphérique 24 et la première région 13, révèle une singularité repérant le contour de l'échantillon au niveau de la première région. En d'autres termes, la distance de débordement est suffisamment importante pour permettre, à partir de la mesure par photoluminescence, une détermination précise de la position du contour C.

Par « singularité », on entend par exemple un minimum d'intensité.

A cet égard la figure 5 représente le profil de l'intensité du signal de photoluminescence sur un axe s'étendant d'un point A de la section périphérique vers un point B de la première région, l'axe croisant le contour C en un point C1.

La méthode de mesure par photoluminescence peut également comprendre une étape de choix du socle actif 20 parmi une pluralité de socles actifs en fonction du niveau d'intensité secondaire de chaque socle.

En effet, afin d'optimiser le contraste de photoluminescence entre le socle actif 20 et le contour C de l'échantillon, il peut être utile de choisir un socle actif 20 qui présente une intensité secondaire particulière.

A cet égard, les figures 6a à 6c représentent des cartographies de photoluminescences mesurées, respectivement, sur un premier, un second et un troisième échantillon. En particulier, l'intensité de référence croit du premier échantillon au troisième échantillon. Le socle actif 20, dit premier socle actif, mis en oeuvre pour ces trois mesures, présente une intensité secondaire généralement inférieure à l'intensité de référence des second et troisième échantillons.

On observe ainsi à la figure 6a une délimitation nette du contour C du premier échantillon. Aux figures 6b et 6c, la localisation du contour C reste possible mais semble moins précise.

Les figures 7a à 7c représentent des cartographies des premier, second et troisième échantillons, pris dans cet ordre, et mettent en oeuvre un autre socle actif 20, dit second socle actif. Le second socle actif présente une intensité secondaire supérieure à l'intensité de référence du troisième échantillon.

Quel que soit l'échantillon mesuré, le contour C est parfaitement défini sur chacune des figures 7a à 7c. Cependant, l'analyse du signal de photoluminescence du premier échantillon (figure 7a) reste difficile du fait de l'aveuglement du détecteur D par le signal de photoluminescence émis par le second socle.

La figure 8 illustre un second mode de mise en oeuvre de la présente invention qui reprend pour l'essentiel toutes les caractéristiques du premier mode de mise en œuvre.

Selon ce second mode de mise en oeuvre particulièrement avantageux, une charge de type corona Cor est créée sur la seconde face du socle actif 20. La charge de type corona permet d'ajuster le niveau de l'intensité secondaire, et par conséquent le contraste entre la première région 13 et la section périphérique 24. En d'autres termes, aucune étape de choix d'un socle actif particulier n'est requise pour optimiser le contraste de photoluminescence entre le socle actif 20 et le contour C de l'échantillon 10.

La charge de type corona peut être créée par une anode 30 et une cathode 31 disposées en regard, respectivement, de la face d'accueil 21 et de la seconde face 22.

L'anode peut comprendre une grille intercalée entre l'échantillon 10 et le socle actif 22. La grille peut par exemple comprendre un métal.

Il est également entendu que l'anode 30 et la cathode 31 sont alimentées par un générateur de tension GT.

Selon l'un ou l'autre des premier et second mode de mise en oeuvre, l'échantillon peut également comprendre au moins une seconde région 14, délimitée en partie par le contour C et qui émet un signal de photoluminescence d'une intensité, dite seconde intensité, en moyenne égale à l'intensité de référence (figure 9).

La méthode de mesure met alors en oeuvre des moyens de masquage 40 destinés à masquer le signal de photoluminescence émis par une région 25 de la section périphérique attenante à la seconde région 14.

Les moyens de masquage 40 comprennent un socle intermédiaire 50 intercalé entre l'échantillon 10 et le socle actif 20. Le socle intermédiaire 50 peut par exemple comprendre une région de masquage 40 en recouvrement de la région 25 de la section périphérique 24 attenante à la seconde région 14.

Le socle intermédiaire 50 comprend un matériau transparent au signal de photoluminescence émis par le socle actif 20, et est recouvert au niveau de la ou des régions de masquage 40 d'un matériau opaque à ce même signal.

Le matériau transparent peut comprendre un plastique, tandis que le matériau opaque peut comprendre une couche de matériau métallique.

Le socle actif 20 peut comprendre une pluralité de mini-socles actifs 20a. En particulier, chaque mini-socle peut se voir imposer une charge corona différentes des autres mini-socles de manière à optimiser le niveau de contraste sur différentes section de l'échantillon.

Par la suite un dispositif de mesure par photoluminescence adapté pour la mise en oeuvre de la méthode de mesure par photoluminescence selon la présente invention est présenté. Le dispositif reprend l'essentiel des éléments décrits dans la présente description détaillée, et en particulier les éléments relatif au second mode de mise en oeuvre.

En particulier, le dispositif 100, illustré à la figure 10, comprend :
- un socle, dit socle actif 20, comprenant une face d'accueil 21 pour un échantillon 10, et une seconde face 22 opposée à la face d'accueil,
- une source d'excitation laser,
- un détecteur destiné à collecter un signal de photoluminescence émis par un échantillon et le support sous l'action du laser.

Le socle actif est susceptible d'émettre un signal de photoluminescence sous l'effet d'une excitation par la source d'excitation laser L, le dispositif comprenant en outre des moyens corona destinés à créer une charge de type corona Cor sur la seconde face 22.

Un dispositif de mesure par photoluminescence comprend donc:
- un socle, dit socle actif, comprenant une face d'accueil pour un échantillon, et une seconde face opposée à la face d'accueil,
- une source d'excitation laser,
- un détecteur destiné à collecter un signal de photoluminescence émis par un échantillon et le support sous l'action du laser,
le socle actif est susceptible d'émettre un signal de photoluminescence sous l'effet d'une excitation par la source d'excitation laser, le dispositif comprenant en outre des moyens corona destinés à créer une charge de type corona sur la seconde face.

Le socle actif 20 peut comprendre un substrat fait d'un matériau semi-conducteur, avantageusement le matériau semi-conducteur comprend du silicium.

Le socle actif 20 comprend une première couche de passivation 23 en recouvrement de sa face d'accueil 21, la première couche de passivation 23 étant destinée à guérir des défauts susceptibles d'être présents sur la face d'accueil 21.

Les moyens corona peuvent comprendre une anode 30 et une cathode 31, l'anode comprenant une grille disposée en regard de la face d'accueil, et une cathode en regard de la seconde face.

### REFERENCES

[1] P. Würfel, S. Finkbeiner, and E. Daub, "Generalized Planck's radiation law for luminescence via indirect transitions", Appl. Phys. A Mater. Sci. Process., vol. 60, no. 1, pp. 67-70, Jan. 1995,
[2] T. Trupke, R. A. Bardos, M. C. Schubert, and W. Warta, "Photoluminescence imaging of silicon wafers", Appl. Phys. Lett., vol. 89, no. 4, p. 44107, Jul. 2006.

## Revendications

1. Méthode de mesure par photoluminescence d'une cellule photovoltaïque échantillon (10) qui comprend deux faces, reliées par un contour C, dites, respectivement, face avant (11) et face arrière (12), la cellule photovoltaïque (10) reposant sur une face d'accueil (21) d'un socle, dit socle actif (20), selon sa face arrière (12),
la cellule photovoltaïque (10) comportant au moins une première région (13) en partie délimitée par le contour C et qui émet un signal de photoluminescence d'une intensité, dite première intensité, en tout point inférieure à l'intensité moyenne du signal de photoluminescence de la cellule photovoltaïque (10) dite intensité de référence,
le socle actif (20) émettant un signal de photoluminescence d'une intensité, dite intensité secondaire, au moins égale à l'intensité de référence, le socle actif (20) comprend en outre un bord B à distance, selon une distance de débordement, du contour C, et délimitant avec ledit contour C une section périphérique (24) du socle actif (20).

2. Méthode selon la revendication 1, dans laquelle la distance de débordement, au moins au niveau de l'au moins une première région (13), est ajustée de sorte que l'évolution de l'intensité du signal de photoluminescence entre la section périphérique (24) et la première région (13), révèle une singularité repérant le contour C de la cellule photovoltaïque (10) au niveau de la première région (13), avantageusement, la singularité est un minimum de l'intensité du signal de photoluminescence.

3. Méthode selon la revendication 1 ou 2, dans laquelle la première région (13) comprend une densité de défauts supérieure à la densité de défauts moyenne de la cellule photovoltaïque (10).

4. Méthode selon l'une des revendications 1 à 3, dans laquelle une charge de type corona Cor est créée sur une face, dite seconde face (22), du socle actif (20) opposée à la face d'accueil (21), la charge de type corona Cor étant destinée à ajuster le niveau de l'intensité secondaire.

5. Méthode selon la revendication 4, dans laquelle la charge de type corona Cor est créée par une anode (30) et une cathode (31) disposées en regard, respectivement, de la face d'accueil (21) et de la seconde face (22), avantageusement, l'anode (30) comprend une grille intercalée entre la cellule photovoltaïque (10) et le socle actif (20).

6. Méthode selon l'une des revendications 1 à 5, dans laquelle le socle actif (20) comprend une première couche de passivation (23) en recouvrement de sa face d'accueil (21), la première couche de passivation (23) étant destinée à guérir des défauts susceptibles d'être présents sur la face d'accueil (21), avantageusement, la première couche de passivation (23) comprend une couche faite d'un matériau diélectrique ou de silicium amorphe hydrogéné, avantageusement le matériau diélectrique comprend au moins un des éléments choisi parmi : dioxyde de silicium, nitrure de silicium, alumine.

7. Méthode selon l'une des revendications 1 à 6, dans laquelle le socle actif (20) comprend un matériau semi-conducteur, avantageusement le matériau semi-conducteur comprend du silicium.

8. Méthode selon l'une des revendications 1 à 7, dans laquelle la cellule photovoltaïque (10) comprend également au moins une seconde région (14), délimitée en partie par le contour C et qui émet un signal de photoluminescence d'une intensité, dite seconde intensité, en moyenne égale à l'intensité de référence, la méthode de mesure mettant en oeuvre des moyens de masquage (40) destinés à masquer le signal de photoluminescence émis par une région (25) de la section périphérique (24) attenante à la seconde région (14).

9. Méthode selon la revendication 8, dans laquelle les moyens de masquage (40) comprennent un socle intermédiaire (50) intercalé entre la cellule photovoltaïque (10) et le socle actif (20), le socle intermédiaire (50) comprenant une région de masquage en recouvrement d'une région (25) de la section périphérique (24) attenante à la seconde région (14).

10. Méthode selon l'une des revendications 1 à 7, dans laquelle l'au moins une première région (13) s'étend selon toute la circonférence de la cellule photovoltaïque (10).

11. Méthode selon l'une des revendications 1 à 10, dans laquelle l'exécution du procédé comprend l'excitation par un laser L de l'échantillon (10) et de la section périphérique (24) du socle actif (20).

12. Méthode selon la revendication 11, dans laquelle le laser balaie la face avant (11) et la face d'accueil (21) au niveau de la section périphérique (24).

13. Méthode selon la revendication 11, dans laquelle le laser présente une taille adaptée pour exciter de manière simultanée la cellule photovoltaïque (10) et le socle actif (20).

14. Méthode selon l'une des revendications 11 à 13, dans laquelle le signal de photoluminescence émis par la cellule photovoltaïque (10) et par le socle actif (20) est collecté par un détecteur.

## Patentansprüche

1. Verfahren zur Messung durch Photolumineszenz einer Probe einer Photovoltaikzelle (10), die zwei Flächen umfasst, die durch eine Kontur C, vordere Fläche (11) beziehungsweise hintere Fläche (12) genannt, miteinander verbunden sind, wobei die Photovoltaikzelle (10) auf einer Aufnahmefläche (21) eines Sockels, aktiver Sockel (20) genannt, ruht, entlang seiner hinteren Fläche (12),
wobei die Photovoltaikzelle (10) mindestens einen ersten Bereich (13) beinhaltet, der teilweise durch die Kontur C begrenzt ist, und ein Photolumineszenzsignal mit einer Intensität, erste Intensität genannt, emittiert, die an jedem Punkt unter der durchschnittlichen Intensität des Photolumineszenzsignals der Photovoltaikzelle (10), Referenzintensität genannt, liegt,
wobei der aktive Sockel (20) ein Photolumineszenzsignal mit einer Intensität, sekundäre Intensität genannt, emittiert, die mindestens gleich der Referenzintensität ist, wobei der aktive Sockel (20) ferner eine Kante B mit einem Abstand, gemäß einem Überstandsabstand, von der Kontur C umfasst, und mit der Kontur C einen peripheren Abschnitt (24) des aktiven Sockels (20) begrenzt.

2. Verfahren nach Anspruch 1, wobei der Überstandsabstand mindestens auf dem Niveau des mindestens einen ersten Bereichs (13) so eingestellt ist, dass die Änderung der Intensität des Photolumineszenzsignals zwischen dem peripheren Abschnitt (24) und dem ersten Bereich (13) eine Singularität zeigt, die die Kontur C der Photovoltaikzelle (10) auf dem Niveau des ersten Bereichs (13) markiert, wobei die Singularität vorteilhafterweise ein Minimum der Intensität des Photolumineszenzsignals ist.

3. Verfahren nach Anspruch 1 oder 2, wobei der erste Bereich (13) eine Defektdichte umfasst, die größer ist als die durchschnittliche Defektdichte der Photovoltaikzelle (10).

4. Verfahren nach einem der Ansprüche 1 bis 3, wobei eine Ladung vom Typ Corona Cor auf einer Fläche, zweite Fläche (22) genannt, des aktiven Sockels (20) gegenüber der Aufnahmefläche (21), erzeugt wird, wobei die Ladung vom Typ Corona Cor bestimmt ist, um die Stufe der sekundären Intensität einzustellen.

5. Verfahren nach Anspruch 4, wobei die Ladung vom Typ Corona Cor durch eine Anode (30) und eine Kathode (31) erzeugt wird, die gegenüber der Aufnahmefläche (21) beziehungsweise der zweiten Fläche (22) angeordnet sind, wobei die Anode (30) vorteilhafterweise ein Gate umfasst, das zwischen die Photovoltaikzelle (10) und den aktiven Sockel (20) gestellt ist.

6. Verfahren nach einem der Ansprüche 1 bis 5, wobei der aktive Sockel (20) eine erste Passivierungsschicht (23) umfasst, die seine Aufnahmefläche (21) bedeckt, wobei die erste Passivierungsschicht (23) dazu bestimmt ist, die Defekte zu heilen, die möglicherweise auf der Aufnahmefläche (21) vorhanden sind, wobei die erste Passivierungsschicht (23) vorteilhafterweise eine Schicht umfasst, die aus einem dielektrischen Material oder hydriertem amorphem Silizium gemacht ist, wobei das dielektrische Material vorteilhafterweise mindestens eines der Elemente umfasst, die ausgewählt sind aus: Siliziumdioxid, Siliziumnitrid, Aluminiumoxid.

7. Verfahren nach einem der Ansprüche 1 bis 6, wobei der aktive Sockel (20) ein Halbleitermaterial umfasst, wobei das Halbleitermaterial vorteilhafterweise Silizium umfasst.

8. Verfahren nach einem der Ansprüche 1 bis 7, wobei die Photovoltaikzelle (10) auch mindestens einen zweiten Bereich (14) umfasst, der teilweise durch die Kontur C begrenzt ist, und ein Photolumineszenzsignal mit einer Intensität, zweite Intensität genannt, emittiert, die im Durchschnitt gleich der Referenzintensität ist, wobei das Messverfahren Abschirmungsmittel (40) anwendet, die dazu bestimmt sind, das Photolumineszenzsignal abzuschirmen, das von einem Bereich (25) des peripheren Abschnitts (24) emittiert wird, der an den zweiten Bereich (14) angrenzt.

9. Verfahren nach Anspruch 8, wobei die Abschirmungsmittel (40) einen Zwischensockel (50) umfassen, der zwischen die Photovoltaikzelle (10) und den aktiven Sockel (20) gestellt ist, wobei der Zwischensockel (50) einen Abschirmungsbereich umfasst, der einen Bereich (25) des peripheren Abschnitts (24) bedeckt, der an den zweiten Bereich (14) angrenzt.

10. Verfahren nach einem der Ansprüche 1 bis 7, wobei sich der mindestens eine erste Bereich (13) entlang des gesamten Umfangs der Photovoltaikzelle (10) erstreckt.

11. Verfahren nach einem der Ansprüche 1 bis 10, wobei die Durchführung des Vorgehens die Anregung der Probe (10) und des peripheren Abschnitts (24) des aktiven Sockels (20) durch einen Laser L umfasst.

12. Verfahren nach Anspruch 11, wobei der Laser die vordere Fläche (11) und die Aufnahmefläche (21) auf dem Niveau des peripheren Abschnitts (24) abtastet.

13. Verfahren nach Anspruch 11, wobei der Laser eine Größe aufweist, die geeignet ist, die Photovoltaikzelle (10) und den aktiven Sockel (20) gleichzeitig anzuregen.

14. Verfahren nach einem der Ansprüche 11 bis 13, wobei das Photolumineszenzsignal, das von der Photovoltaikzelle (10) und dem aktiven Sockel (20) emittiert wird, von einem Detektor erfasst wird.

## Claims

1. A method for photoluminescence measurement of a photovoltaic cell sample (10) which comprises two faces, connected by a contour C, called a front face (11) and a rear face (12) respectively, the photovoltaic cell (10) bearing on an accommodating face (21) of a base plate, called an active base plate (20), at its rear face (12),
the photovoltaic cell (10) comprising at least one first region (13) partly delimited by the contour C and which emits a photoluminescence signal with an intensity, called a first intensity, at any point lower than the mean intensity of the photoluminescence signal of the sample (10) called a reference intensity,
the active base plate (20) emitting a photoluminescence signal with an intensity, called a secondary intensity, at least equal to the reference intensity, the active base plate (20) further comprises an edge B at a distance, according to a projection distance, from the contour C, and delimiting a peripheral section (24) of the active base plate (20) with said contour C.

2. The method according to claim 1, wherein the projection distance, at least at the at least one first region (13), is adjusted such that the variation in the intensity of the photoluminescence signal between the peripheral section (24) and the first region (13), reveals a singularity locating the contour C of the sample (10) at the first region (13), advantageously the singularity is a minimum of the photoluminescence signal intensity.

3. The method according to one of claims 1 or 2, wherein the first region (13) comprises a defect density higher than the mean defect density of the photovoltaic cell (10).

4. The method according to one of claims 1 to 3, wherein a corona type charge Cor is created on a face, called a second face (22), of the active base plate (20) opposite to the accommodating face (21), the corona type charge Cor being intended to adjust the secondary intensity level.

5. The method according to claim 4, wherein the corona type charge Cor is created by an anode (30) and a cathode (31) disposed facing the accommodating face (21) and the second face (22) respectively, advantageously the anode (30) comprises a grid interposed between the sample (10) and the active base plate (20).

6. The method according to one of claims 1 to 5, wherein the active base plate (20) comprises a first passivation layer (23) covering its accommodating face (21), the first passivation layer (23) being intended to heal defects likely to be present on the accommodating face (21), advantageously the first passivation layer (23) comprises a layer made of a dielectric material or of hydrogenated amorphous silicon, advantageously the dielectric material comprises at least one of elements selected among: silicon dioxide, silicon nitride, alumina.

7. The method according to one of claims 1 to 6, wherein the active base plate (20) comprises a semiconductor material, advantageously the semiconductor material comprises silicon.

8. The method according to one of claims 1 to 7, wherein the photovoltaic cell (10) also comprises at least one second region (14), partly delimited by the contour C and which emits a photoluminescence signal with an intensity, called a second intensity, equal to the reference intensity on average, the measurement method implementing masking means (40) intended to mask the photoluminescence signal emitted by a region (25) of the peripheral section (24) adjoining the second region (14).

9. The method according to claim 8, wherein the masking means (40) comprise an intermediate base plate (50) interposed between the sample (10) and the active base plate (20), the intermediate base plate (50) comprising a masking region covering a region (25) of the peripheral section (24) adjoining the second region (14).

10. The method according to one of claims 1 to 9, wherein the at least one first region (13) extends over the entire circumference of the photovoltaic cell (10).

11. The method according to one of claims 1 to 10, wherein carrying out the process comprises exciting the sample (10) and the peripheral section (24) of the active base plate (20) by a laser L.

12. The method according to claim 11, wherein the laser sweeps the front face (11) and the accommodating face (21) at the peripheral section (24).

13. The method according to claim 11, wherein the laser has a size adapted to excite the photovoltaic cell (10) and the active base plate (20) simultaneously.

14. The method according to one of claims 11 to 13, wherein the photoluminescence signal emitted by the photovoltaic cell (10) and by the active base plate (20) is collected by a detector.
